# EUROPÄISCHE PATENTANMELDUNG

(11) **EP 3 666 986 A1**
(43) Veröffentlichungstag der Anmeldung: **17.06.2020**
(21) Anmeldenummer: 18400037.0
(22) Anmeldetag: 11.12.2018
(51) Int. Cl.: E03F 9/00, G01F 15/06, G05B 15/00, H04Q 9/00, H04W 24/00, E03F 7/00, G06Q 10/06

(54) **VERFAHREN ZUR BEDARFSORIENTIERTEN REINIGUNG VON ABWASSERKANÄLEN UND SINKKÄSTEN**

(71) Anmelder: ECBM GmbH, 40667 Meerbusch (DE)
(72) Erfinder: Schloten, Elisabeth, 40667 Meerbusch (DE); Kapust, Roland, 48165 Münster (DE)

(57) **Zusammenfassung**

Die vorliegende Erfindung betrifft ein Verfahren zur Bestimmung, Planung, Verfeinerung und Dokumentation von bedarfsorientierten Reinigungsvorgängen und Reinigungsprogrammen für Abwasserkanäle, Sinkkästen oder Straßeneinläufe. Die Erfindung dient der Überführung von turnusmäßigen Reinigungsvorgängen von Abwasserkanälen, Sinkkästen oder Straßeneinläufen zu bedarfsorientierten Reinigungsvorgängen, durch eine Kombination von mit einer zentralen Stelle vernetzten Messanlagen in Revisionsschächten bzw. Kanalhaltungen, Sinkkästen oder Straßeneinläufen und einem Algorithmus, der der Vorbestimmung von Einbauorten der Messanlagen durch Einbeziehung ablagerungsbildender Einflussgrößen dient.

## Beschreibung

Die vorliegende Erfindung betrifft ein Verfahren zur Bestimmung, Planung, Verfeinerung und Dokumentation von bedarfsorientierten Reinigungsvorgängen und Reinigungsprogrammen für Abwasserkanäle, Sinkkästen oder Straßeneinläufe. Die Erfindung dient der Überführung von turnusmäßigen Reinigungsvorgängen von Abwasserkanälen, Sinkkästen oder Straßeneinläufen zu bedarfsorientierten Reinigungsvorgängen, durch eine Kombination von mit einer zentralen Stelle vernetzten Messanlagen in Revisionsschächten bzw. Kanalhaltungen, Sinkkästen oder Straßeneinläufen und einem Algorithmus, der der Vorbestimmung von Einbauorten der Messanlagen durch Einbeziehung ablagerungsbildender Einflussgrößen dient.

Das öffentliche Kanalnetz besteht aus Regen-, Schmutz-, Misch- und Straßenentwässerungskanälen. Das öffentliche Kanalnetz dient der schadlosen Ableitung von Regen-, Schmutz-, Misch-, und Schmelzwasser. Dieses Kanalnetz muss unterhalten werden, um den Wert der gesamten Anlage zu erhalten und vor allem die Funktionsfähigkeit sicher zu stellen. In den Kanälen bilden sich Ablagerungen, die durch Spülarbeiten gelöst und dann abgesaugt werden. Bislang werden in vielen Kommunen Kanäle der Ortsentwässerung turnusmäßig gereinigt, was dazu führt, dass Kanäle gespült werden, die keinerlei Ablagerungen haben und somit voll funktionsfähig sind. Seit Erscheinen der DIN EN 14654-1:2014-08 (D) ist ein Reinigungsprogramm zu erarbeiten. Für die Erlangung der erforderlichen Grunddaten des Reinigungsprogramms muss ein Programm zur Gewinnung der notwendigen Daten durchgeführt werden. Teil der notwendigen Daten ist die Kenntnis von Kanalabschnitten mit Ablagerungsbildung. Bislang erfolgt die Detektion dieser Kanalabschnitte mit Ablagerungsbildung und somit der Spülschwerpunkte mithilfe von TV-Inspektion mittels Fahrwagen, Inaugenscheinnahme der Schachtgerinne, Schachtkameras, Kanalspiegelungen, Begehungen und ggf. dem Einsatz "Sehender Düsen" und den Erfahrungen der Mitarbeiter des Kanalbetriebes (siehe hierzu auch: Abschlussbericht der Ruhruniversität Bochum, Fakultät für Bau- und Umweltingenieurwissenschaften, Lehrstuhl für Siedlungswasserwirtschaft und Umwelttechnik: Untersuchungen zur bedarfsorientierten Kanalreinigung unter Nutzung betrieblicher Synergien Phase I & II, Bochum, Mai 2015, im Auftrag vom Ministerium für Klimaschutz, Umwelt, Landwirtschaft, Natur- und Verbraucherschutz des Landes NRW).

Auch die Entleerung der Ablagerungen in öffentlichen Straßeneinläufen oder sogenannten Sinkkästen erfolgt in den Städten in der Regel turnusmäßig. Straßeneinläufe oder Sinkkästen werden in den öffentlichen Straßen angeordnet, um diese bei Regenwetter oder beim Anfall von Schmelzwasser zu entwässern. Das oberflächig durch Regenereignisse oder Tauwetterperioden auf öffentlichen Straßen anfallende Wasser muss aus verkehrssicherheitstechnischen Gründen der öffentlichen Kanalisation zugeführt werden. Man unterscheidet nasse Straßeneinläufe von trockenen Straßeneihläufen. Nasse Straßeneinläufe sind zylindrische, in den Straßenkörper eingebrachte Bauteile, die mit einem Einlaufrost versehen sind. In einem bestimmten Abstand unterhalb des Einlaufrostes ist ein Ablauf zum öffentlichen Kanal vorgesehen. Unterhalb dieses Ablaufes ist ein Schlammsammeltopf mit festem Boden angeordnet, der sich im Zuge von Regenereignissen mit abgeschwemmten absetzbaren Stoffen, wie Staub, Laub, Winterstreugut oder Granulat, Reifen- und Bremsenabrieb füllt. Trockene Straßeneinläufe unterscheiden sich darin, dass unterhalb des Einlaufrostes ein Schlammsammeleimer angeordnet ist, der entnommen und entleert werden kann. Direkt unterhalb dieses Eimers ist ein Ablauf zur öffentlichen Kanalisation angeordnet. Auch die Eimer der trockenen Straßeneinläufe füllen sich mit Staub, Laub, Winterstreugut oder Granulat, Reifen- und Bremsenabrieb. Sowohl die nassen als auch die trockenen Straßeneinläufe müssen entleert werden.

Diese in **0002** genannten verschiedenen Methoden zur Feststellung von Ablagerungen kosten sehr viel Zeit und sind sehr personalintensiv, da die Ablagerungen im Kanalnetz gesucht werden müssen. Auch die benötigten in **0002** genannten Gerätschaften sind sehr kostenintensiv. Die Bündelung der so gesammelten Erkenntnisse und die daraus resultierenden Reinigungsprogramme sind bislang sehr aufwendig. Die Suche nach Ablagerungen muss auch regelmäßig wiederholt werden, was wieder zu hohen Kosten führt Die vielerorts noch durchgeführte turnusmäßige Reinigung produziert ebenfalls sehr hohe Kosten gerade in Hinblick darauf, dass viele Kanäle nicht gereinigt werden bräuchten.

Derzeit werden die in **0003** genannten Straßeneinläufe turnusmäßig gereinigt und sehr häufig wäre eine Reinigung nicht erforderlich, d. h. dass eine Vielzahl von Straßeneinläufen mit einem Reinigungsfahrzeug angefahren werden und es wird dann vor Ort festgestellt, dass eine Reinigung nicht erforderlich gewesen wäre. Aber auch der andere Fall, dass vereinzelte Straßeneinläufe seit längerer Zeit überfüllt sind, kommt sehr häufig vor. Dies führt zur Gefährdung der Verkehrssicherheit im Winter durch überfrierende gestaute Nässe oder zu Pfützenbildung bei Regenereignissen über das ganze Jahr. Auch können Überflutungen von Kellern, Gebäuden und Tiefgaragen Folge von verstopften und überfüllten Straßeneinläufen oder Sinkkästen sein.

In der Praxis wäre es wünschenswert ein Verfahren anwenden zu können, das verschiedene Einflussgrößen auf Ablagerungsbildung bündelt, die Bildung von Ablagerungen aufzeichnet und so und Vorhersagen ermöglicht.

Bislang erfolgt die Ermittlung von Ablagerungen im Kanalnetz wie schon in **0002** erwähnt mithilfe von TV-Inspektion mittels Fahrwagen, Inaugenscheinnahme der Schachtgerinne, Schachtkameras, Kanalspiegelungen, Begehungen und ggf. dem Einsatz "Sehender Düsen" und den Erfahrungen der Mitarbeiter des Kanalbetriebes. Ein bestimmtes Verfahren zur Ablagerungsfeststellung in Straßeneinläufen oder Sinkkästen außer der örtlichen Kontrolle durch Inaugenscheinnahme wird bislang nicht eingesetzt.

Die in **0004** genannten hohen entstehenden Kosten und der hohe Personalbedarf werden durch die Erfindung, der Messung von Ablagerungen und Übertragung über eine Datenverbindung an eine zentrale Stelle, deutlich reduziert. Die Messanlagen müssen für einen Messzyklus nur einmal installiert werden und liefern dann punktgenaue Ergebnisse über das Ablagerungsverhalten des betreffenden Kanalnetzes. Prognosen zum Ablagerungsverhalten werden möglich, und somit wird die Umsetzung der DIN EN 14654-1 deutlich vereinfacht.

Wie auch bei der Kanalreinigung besteht bei der Straßeneinlauf- oder Sinkkastenreinigung erhebliches Einsparpotential durch die Erfindung. Auch können durch die Erfindung Gefahren wie in **0005** beschrieben abgewehrt werden. Durch die Installation von Messanlagen in den Einlaufrosten der Straßeneinläufe bzw. Sinkkästen besteht die Möglichkeit, auf volle Schlammsammeltöpfe oder Schlammsammeleimer unmittelbar mit deren Leerung zu reagieren.

Die vorliegende Erfindung betrifft ein Verfahren zur Bestimmung, Planung, Verfeinerung und Dokumentation von bedarfsorientierten Reinigungsvorgängen und Reinigungsprogrammen für Abwasserkanäle. Die Erfindung dient der Überführung von turnusmäßigen Reinigungsvorgängen von Abwasserkanälen zu bedarfsorientierten Reinigungsvorgängen, durch eine Kombination von mit einer zentralen Stelle vernetzten Messanlagen in Revisionsschächten bzw. Kanalhalturigen und einem Algorithmus, der der Vorbestimmung von Einbauorten der Messanlagen durch Einbeziehung ablagerungsbildender Einflussgrößen dient. Die Messanlagen beinhalten ein Datenübertragungsmodul zur Weiterleitung der aufgenommenen Werte und Batterien zur Energieversorgung. Die Messanlagen ermitteln das Anwachsen von Ablagerungen in Kanalnetzen. Die so gewonnen Informationen werden strukturiert zur Verfügung gestellt, z.B. über Schnittstellen zu Betriebsführungssystemen, Portalen und Apps. Die Einbauorte der Messanlagen wurden zuvor unter Einbeziehung ablagerungsbildender Einflussgrößen durch einen Algorithmus ermittelt. Die Eingangsdaten für den Algorithmus sind die Wandschubspannungen der einzelnen Haltungen des gesamten Kanalnetzes, ablagerungsbildende Schadstellen wie Verwurzelungen, Unterbögen, Scherbenbildung, klaffende Muffenspalte, einragende Stutzen im Kanal und historische Kenntnisse aus Betriebsführungssystemen und von den lokalen Experten. Bei Einsatz eines Betriebsführungssystems sind hier oftmals historische Daten abgelegt, die auf erhöhtes Ablagerungsverhalten hindeuten. Die Ermittlung der Wandschubspannungen erfolgt anhand von bekannten Bestandsparametem des Kanalnetzes und der bekannten Berechnungsmethode für die Wandschubspannungen. Alle zuvor genannten Einflussgrößen und Hinweise auf ein erhöhtes Ablagerungsverhalten durchlaufen einen Algorithmus, der eine prozentuale Wahrscheinlichkeit für Ablagerungsbildung im gesamten Kanalnetz für jede einzelne Kanalhaltung ausgibt. In den jeweils oberhalb der Haltungen mit hoher Wahrscheinlichkeit für Ablagerungsbildung angeordneten Schächten werden Messanlagen auf der Ablaufseite über dem Gerinne an der Schachtwand eingebaut.

Das Verfahren mit den in **0010** angegebenen Merkmalen wird folgendermaßen angewendet. Zunächst werden für die Kanalhaltungen die Wandschubspannungen ermittelt. In den Haltungen mit niedrigen Wandschubspannungen (Grenzwerte nach Arbeitsblatt DWA-A 110 Hydraulische Dimensionierung und Leistungsnachweis von Abwasserleitungen und -kanälen) ist die Wahrscheinlichkeit zur Bildung von Ablagerungen hoch. Die hierfür benötigten Parameter bezieht der in der zentralen Stelle ablaufende Algorithmus aus einem Kanalinformationssystem oder geografischem Informationssystem und einer Hydrauliksoftware: Dann fließen ablagerungsfördernde Schäden wie in **0010** benannt aus einem Kanalzustandskataster in den Algorithmus ein. Als weitere Eingangsdaten fließen Kenntnisse über Ablagerungen aus langjährigen Erfahrungen lokaler Experten in den Algorithmus ein. Auch im Rahmen von durchgeführten Spülarbeiten sind in Betriebsführungssystemen Hinweise auf Ablagerungen in der Form vorhanden, dass die Kanalhaltung pro Spülgang mehr als 1 Mal durchgezogen wurde. Diese Daten fließen in den Algorithmus ein. Auch im Rahmen von Schachtkontrollen festgestellte Ablagerungen sind in Betriebsführungssystemen hinterlegt und fließen ebenfalls in den Algorithmus ein. Ausgegeben wird der Name Schacht oben und der Name unterhalb liegenden Kanalhaltung. In diesen Bereichen werden die Revisionsschächte mit Messanlagen ausgestattet. Die Messanlagen werden i. d. R. auf der Ablaufseite des Schachtes oben an der Schachtwand über dem Gerinne angebracht.

Bei der zentralen Stelle handelt es sich um eine zentrale Datenbank oder sogenannte IoT-Plattform, die Daten aus weiteren Quellen erhält. Diese Plattform kann in der Cloud als Software as a Service zur Verfügung gestellt, beim Entwässerungsbetrieb vor Ort installiert oder in einem beliebigen Rechenzentrum betrieben werden.

In der zentralen Stelle läuft ein Algorithmus, der aus einer Kombination aus diesen Daten und den Werten aus den Messanlagen im Kanal errechnet, wann voraussichtlich die nächste Spülung welchen Kanals erforderlich ist. Die von den Messanlagen übermittelten Werte bestätigen oder widerlegen die Ergebnisse der Berechnungen, so dass der Algorithmus über Zeit lernt und kontinuierlich genauer wird. Die Messanlagen ergänzen auch Datenlücken. Wenn eine Messanlage über einen bestimmten Zeitraum, z.B. einige Wochen, einen erhöhten Füllstand meldet, ist das ein deutlicher Hinweis auf eine Ablagerung.

Die Vorausberechnungen bezüglich der nächsten erforderlichen Spülungen und die Messdaten werden dann auf verschiedenen Wegen dem Nutzer zugänglich gemacht. Sie können über eine Schnittstelle an ein Betriebsführungssystem übergeben werden, die dann Spülaufträge generiert. Außerdem können sie über ein Portal oder eine App den Nutzern angezeigt werden.

Die vorliegende Erfindung zu **0003** betrifft ein Verfahren zur Bestimmung, Planung, Verfeinerung und Dokumentation von bedarfsorientierten Entleerungsvorgängen und Entleerungsprogrammen für Straßeneinläufe oder Sinkkästen. Die Erfindung dient der Überführung von turnusmäßigen Entleerungsvorgängen von Straßeneinläufe oder Sinkkästen zu bedarfsorientierten Entleerungsvorgängen, durch eine Kombination von mit einer zentralen Stelle vernetzten Messanlagen in Straßeneinläufen oder Sinkkästen und einem Algorithmus, der der Vorbestimmung von Einbauorten der Messanlagen durch Einbeziehung ablagerungsbildender Einflussgrößen dient. Die Messanlagen werden in den Einlaufrosten oder unter den Abdeckplatten von Straßeneinläufen oder Sinkkästen angebrachten, die über eine Datenverbindung Ablagerungen in den Schlammtöpfen oder Eimern an eine zentrale Stelle melden. Andere Einbauorte oberhalb der Schlammtöpfe oder Eimer sind möglich. Die Messanlagen beinhalten ein Datenübertragungsmodul zur Weiterleitung der aufgenommenen Werte und Batterien oder Solarmodule zur Energieversorgung. Die Messanlagen ermitteln das Anwachsen von Ablagerungen in den Schlammtöpfen oder Eimern der Straßeneinläufe oder Sinkkästen. Die so gewonnen Informationen werden strukturiert zur Verfügung gestellt, z.B. über Schnittstellen zu Betriebsführungssystemen, Portale und Apps. Die Einbauorte der Messanlagen wurden zuvor durch einen Algorithmus ermittelt. Die Eingangsdaten für den Algorithmus sind die Lagedaten der Straßeneinläufe oder Sinkkästen, Granulatstreupläne aus den Winterdienstplänen der Kommunen, Baumstandorte in Straßeneinlauf- oder Sinkkastennähe aus einem Baumkataster und das Wissen zu verstärktem Ablagerungsaufkommen von lokalen Experten und Betriebsführungssystemen.

Das Verfahren mit den in **0015** angegebenen Merkmalen wird folgendermaßen angewendet. Zunächst fließen die Lagedaten der Straßeneinläufe oder Sinkkästen in einen Algorithmus, der in einer zentralen Stelle abgelegt ist, ein. Im Anschluss fließen die Granulatstreupläne aus den Winterdienstplänen einer Kommune in den Algorithmus. Nach Regenereignissen und in Tauwetterperioden wird das Granulat in die Straßeneinläufe oder Sinkkästen eingeschwemmt und füllt so verstärkt die Schlammtöpfe oder Eimer. Auch die Standorte von Bäumen in der Nähe von Straßeneinläufen oder Sinkkästen fließen aus einem Baumkataster in den Algorithmus ein. Weiterhin fließen die Kenntnisse von lokalen Experten über ein verstärktes Ablagerungsverhalten von Straßeneinläufen und Sinkkästen in den Algorithmus ein. Der Algorithmus gibt im Anschluss die mit hoher Wahrscheinlichkeit häufig zu reinigenden Straßeneinläufe oder Sinkkästen aus. Diese Straßeneinläufe oder Sinkkästen werden mit Messanlagen ausgestattet um das berechnete Verhalten zu überprüfen.

Bei nassen Straßeneinläufen befindet sich unterhalb des Straßeneinlaufrostes ein Schlammsammeltopf mit Überlauf zum Kanalnetz. Hier wird das Verfahren wie folgt angewendet:
Eine Messanlage wird über dem Schlammsammeltopf angebracht. Der Abstand zwischen Messanlage und Wasseroberfläche des Schlammsammeltopfes ist der Normalzustand. Wenn der Schlammsammeltopf voll ist, bildet sich ein kleiner Hügel über der Wasseroberfläche, so dass sich der Abstand zur Messanlage reduziert. Der Abstand zwischen Messanlage und Schlammsammeltopf wird in regelmäßigen Abständen übermittelt. Sobald die zentrale Stelle feststellt, dass über einen bestimmten Zeitraum, z.B. einige Tage, ein reduzierter Abstand beobachtet wird, muss der Schlammsammeltopf geleert werden und ein Entleerungsauftrag wird generiert. Der Entleerungsauftrag wird in das Betriebsführungssystem, das Portal oder die App übertragen und einer Entleerungskolonne zugewiesen. Dies kann vom System automatisiert oder manuell erfolgen. Der Auftrag wird ausgeführt. Die Ausführung wird in der zentralen Stelle dokumentiert.

Bei trockenen Straßeneinläufen befindet sich unterhalb des Straßeneinlaufrostes ein gelochter Eimer, der Feststoffe auffängt und das Wasser nach unten und zu den Seiten durchlässt. Hier ist das Verfahren wie folgt: Über dem Eimer wird eine Messanlage angebracht und der Abstand zwischen Messanlage und Eimerfülloberkante gemessen und übermittelt. Sobald die zentrale Stelle feststellt, dass über einen bestimmten Zeitraum, z.B. einige Tage, ein reduzierter Abstand beobachtet wird, muss der Schlammsammeleimer geleert werden und ein Entleerungsauftrag wird generiert. Der Entleerungsauftrag wird in das Betriebsführungssystem, das Portal oder die App übertragen und einer Entleerungskolonne zugewiesen. Dies kann vom System automatisiert oder manuell erfolgen. Der Auftrag wird ausgeführt. Die Ausführung wird in der zentralen Stelle dokumentiert.

Bei der zentralen Stelle handelt es sich um eine zentrale Datenbank oder sogenannte IoT-Plattform, die Daten aus weiteren Quellen erhält. Diese Plattform kann in der Cloud als Software as a Service zur Verfügung gestellt, beim Entwässerungsbetrieb vor Ort installiert oder in einem beliebigen Rechenzentrum betrieben werden.

Da die Batterielebensdauer rd. 5 Jahre beträgt ist es sinnvoll, die zu betrachtenden Straßeneinläufe oder Sinkkästen gebietsbezogen in 5 Teile aufzuteilen. Das Verfahren wie in **0014 bis 0018** beschrieben, durchläuft einen Jahreszyklus. Im Anschluss können die im 1. Teil eines Gebietes angebrachten Messanlagen in ein weiteres Gebiet umgesetzt werden, um so im Laufe von 5 Jahren einen kompletten Überblick über das Ablagerungsverhalten der gesamten Straßeneinläufe oder Sinkkästen zu bekommen.

Mit dem in **0015 bis 0020** beschriebenen Verfahren und den entsprechenden Randbedingungen ist dann auf Grundlage der aufgezeichneten Messwerte eine Vorausberechnung des Ablagerungsverhalten von Straßeneinläufen oder Sinkkästen möglich. Die Vorausberechnungen bezüglich der nächsten erforderlichen Leerung und die Messdaten werden dann auf verschiedenen Wegen dem Nutzer zugänglich gemacht. Sie können über eine Schnittstelle an ein Betriebsführungssystem übergeben werden, das dann Leerungsaufträge generiert. Außerdem können sie über ein Portal oder eine App den Nutzern angezeigt werden.

Nachfolgend wird die Erfindung zu **0010 und 0015** beispielhaft anhand der beigefügten Schritte beschrieben. In diesen zeigen:

**Schritt 1a** eine schematische Darstellung des erfindungsgemäßen Ablaufes der in den Algorithmus **20** einfließenden Parameter mit Ermittlung der priorisierten ablagerungsgefährdeten Kanalhaltungen **26** und Ausgabe der mit einer Messanlage **62** auszustattenden Schächte **84,**

**Schritt 1b** eine schematische Darstellung des erfindungsgemäßen Ablaufes der in den Algorithmus **20** einfließenden Parameter mit Ermittlung der priorisierten **40** ablagerungsgefährdetsten Straßeneinläufe oder Sinkkästen **68 bzw. 74** und Ausgabe der mit einer Messanlage **62** auszustattenden Straßeneinläufe oder Sinkkästen **68 bzw. 74 ,**

**Schritt 2** eine schematische Darstellung der erfindungsgemäßen Messanlagenmontagesituationen in Revisionsschächten **84,** nassen **74** und trockenen **68** Straßeneinläufen oder Sinkkästen **68 bzw. 74** mit der entsprechenden Vernetzung, je nach Technologie über einen Gateway **60,** Router **60** oder anderen Empfänger **60** und dem Datenfluss der Messdaten **68** und **58** zurück in die zentrale Stelle **18** und deren Weiterverarbeitung im Algorithmus **20** bis zur Ausgabe von Arbeitsaufträgen **48.**

**Im Schritt 1a** hat die zentrale Stelle **18** folgende Input Schnittstellen zu Software und Messanlagen **62** und bezieht die benannten Daten:
- Geografisches Informationssystem bzw. Karialinfonnationssystem **2,** die zentrale Stelle **18** bezieht von dort alle geographischen Daten **10** des Kanalnetzes und entsprechende eindeutige Schacht- und Haltungsnummern **10.**
- Hydrauliksoftware **4,** die zentrale Stelle **18** bezieht von dort die Wandschubspannung **12** mit Grenzwerten für die einzelnen Kanalhaltungen des Kanalnetzes mit Übergabe von eindeutigen Schacht- und Haltungsnummern **10.**
- Kanalzustandskataster **6,** die zentrale Stelle **18** bezieht von dort alle ablagerungsbildende Schäden **14** oder bekannte Abflusshindernisse **14** mit Übergabe von eindeutigen Schacht- und Haltungsnummern.
- Betriebsführungssystem **8,** die zentrale Stelle bezieht von dort alle ablagerungsrelevanten historischen Spül- und Schachtinspektionsinformationen **16** mit Übergabe von eindeutigen Schacht- und Haltungsnummern.
- Erfahrungen des Kanalbetriebspersonals **8** zu ablagerungsbildenden Stellen im Kanalnetz mit Angabe von eindeutigen Schacht- und Haltungsnummern.

Aus den in **0026** genannten Eingangsdaten **10,12,14,16** ermittelt der in der zentralen Stelle **18** abgelegte Algorithmus **20** Wahrscheinlichkeiten für Ablagerungen **22** in Kanalhaltungen **78.** Der Algorithmus **18** priorisiert die Kanalhaltungen **24** mit hoher Ablagerungswahrscheinlichkeit **22** und gibt Vorschläge für Einbauorte **26** von Messanlagen **62** in Form von Schachtnummern **26** aus. Ausgegeben wird immer der oben liegende Schacht **26** einer ablagerungsbildenden Kanalhaltung **78,**

Im **Schritt 1b** hat die zentrale Stelle **18** folgende Input Schnittstellen zu Software und Messanlagen **62** und bezieht die benannten Daten:
- Geografisches Informationssystem **2** bzw. Kanalinformationssystem **2,** die zentrale Stelle **18** bezieht von dort alle geographischen Lagedaten **10** und Straßeneinlauf- oder Sinkkastennummern **32.**
- Granulatstreupläne **28** aus den Winterdienstplänen **28,** die zentrale Stelle **18** bezieht aus den Streuplänen **28** Daten in Hinblick auf verstärkte Ablagerurigsbildung in Straßeneinläufen oder Sinkkästen **68 bzw. 74,** wo Granulat **34** in Tauwetterperioden oder während Niederschlagsereignissen in die Straßeneinläufe oder Sinkkästen **68 bzw. 74** eingetragen wird. Übergeben werden Straßennamen mit Straßenabschnitten in georeferenzierter Form **28 und 32.**
- Baumkataster **30,** die zentrale Stelle **18** bezieht von dort georeferenzierte Standortdaten **36** von Bäumen. Da Bäume im Herbst ihr Laub abwerfen und im Frühjahr Blütenstaub auf den Straßen ablagern, nehmen sie starken Einfluss auf das Ablagerungsverhalten 38 von Straßeneinläufen und Sinkkästen **68 bzw. 74.**
- Betriebsführungssystem **8,** die zentrale Stelle **18** bezieht von dort alle ablagerungsrelevanten historischen Straßeneinlauf- oder Sinkkastenausfuhrdaten **68 bzw. 74** mit Übergabe von eindeutigen Straßeneinlauf- oder Sinkkastennummern **16.**
- Erfahrungen des Kanalbetriebspersonals **8** zu ablagerungsbildenden Gebieten **16** im Straßeneinlauf- oder Sinkkastennetz **68 bzw. 74.** Angabe von eindeutigen Straßeneinlauf- oder Sinkkastennummern.

Aus den in **0028** genannten Eingangsdaten **32, 34, 36, 16** ermittelt der in der zentralen Stelle **18** abgelegte Algorithmus **20** Wahrscheinlichkeiten für Ablagerungen **38** in Straßeneinläufen oder Sinkkästen **68 bzw. 74.** Der Algorithmus **20** priorisiert die Straßeneinläufe oder Sinkkästen **68 bzw. 74** mit hoher Ablagerungswahrscheinlichkeit **38** und gibt Vorschläge für Einbauorte **40** von Messanlagen **62** in Form von Straßeneinlauf- oder Sinkkastennummern **40** aus.

Im **Schritt 2** muss das Datennetz, über das die festgestellten Zustände **54** in den Schächten **84,** Straßeneinläufen oder Sinkkästen **68 bzw. 74** gesendet werden **86, 58,** aufgebaut werden öder es wird auf ein vorhandenes Netz zurückgegriffen.

Alle zuvor ermittelten Schächte **84,** Straßeneinläufe oder Sinkkästen **68 bzw. 74** mit der Wahrscheinlichkeit einer erhöhten Ablagerungsbildung **26, 40** werden mit Messanlagen **62** ausgestattet. Die Messanlagen **62** verfügen über Datenübertragungsmodule. Die Messanlagen **62** sind mit Batterien zur Langzeitenergieversorgung ausgestattet. Auch kann die Energieversorgung über Solarzellen erfolgen.

Die Messanlagen **62** in den Schächten **84,** Straßeneinläufen oder Sinkkästen **68 bzw. 74** übermitteln über das verbaute Datenübertragungsmodul und das aufgebaute, oder bereits vorhandene, Datennetz täglich den Abstand zwischen Messanlagenunterkante **82** und Wasseroberfläche des im Gerinne **80** fließenden Abwassers an die zentrale Stelle **18.** Bei einem Kanal ohne Ablagerungen ist dieser Abstand höchstens so groß wie der Abstand zwischen der Unterkante der Messanlage **82** und der Gerinnesohle **80.** Bei Trockenwetter werden nun über eine Woche Tagesganglinien aufgezeichnet. Der hier aufgezeichnete niedrigste Wert stellt dann die Nulllinie für die Ereigniserfassung dar. Bilden sich nun Ablagerungen **88** im Kanal, reduziert sich dieser Abstand von der Nulllinie und der Messanlagenunterkante **82.**

Die Messanlagen **62** für nasse Straßeneinläufe oder Sinkkästen **74** wird über dem Schlammsammeltopf **92** angebracht. Der Abstand zwischen Messanlagenunterkante **72** und Wasseroberfläche **94** des Schlammsammeltopfes **92** ist der Normalzustand. Wenn der Schlammsammeltopf voll ist, bildet sich ein kleiner. Hügel **76** über der Wasseroberfläche **94,** so dass sich der Abstand zur Messanlage **62** reduziert. Der Abstand zwischen Messanlagenunterkante **72** und Schlammsammeltopf **36** wird in regelmäßigen Abständen übermittelt **68,58,54.**

Die Messanlagen **62** für trockene Straßeneinläufe oder Sinkkästen **68** werden über dem Eimer **70** angebracht und der Abstand zwischen Messanlagenunterkante **72** und Eimerfülloberkante **66** wird gemessen und übermittelt **68,58,54.** Füllt sich der Eimer **70** bis über die Eimerfülloberkante **66** reduziert sich der Abstand zwischen Messanlagenunterkante **72** und Eimerfülloberkante **66.**

Im Anschluss laufen alle gemessenen Werte der Messanlagen **62,** und damit das Ablagerungsverhalten, in die zentrale Stelle **18.**

Hat sich im Schacht **84** der Abstand zwischen Messanlagenunterkante **82** und Nulllinie um 15 % des abgehenden Rohrdurchmessers reduziert und tritt an z.B. 3 aufeinander folgenden Tagen auf, wird ein Spülauftrag **48** generiert. Diese Routine ist erforderlich, um bei Misch-, Straßenentwässerungs- und Regenwasserkanälen auszuschließen, dass ein Regenereignis und damit einhergehende höhere Füllstände das Verfahren verfälschen. Der Spülauftrag **48** wird in das Betriebsführungssystem **8,** das Portal **44** oder die App **46** übertragen und einer Spülkolonne zugewiesen, vom System automatisiert oder manuell, und ausgeführt. Die Ausführung wird im System dokumentiert **50.**

Sobald die zentrale Stelle **18** feststellt, dass über einen bestimmten Zeitraum, z.B. einige Tage, ein reduzierter Abstand zwischen Messanlagenunterkante **72** und Wasseroberfläche **94** der nassen Straßeneinläufe oder Sinkkästen **74** beobachtet wird, muss der Schlammtopf **92** geleert werden, und ein Entleerungsauftrag **48** wird generiert. Der Entleerungsauftrag **48** wird in das Betriebsführungssystem **8,** das Portal **44** oder die App **46** übertragen und einer Entleerungskolonne zugewiesen. Dies kann vom System automatisiert oder manuell erfolgen. Der Auftrag wird ausgeführt. Die Ausführung **50** wird in der zentralen Stelle **18** dokumentiert.

Sobald die zentrale Stelle 18 feststellt, dass über einen bestimmten Zeitraum, z.B. einige Tage, ein reduzierter Abstand zwischen Messanlagenunterkante **72** und Eimerfülloberkante **66** der trockenen Straßeneinläufe oder Sinkkästen **68** beobachtet wird, muss der Schlammeimer **70** geleert werden und ein Entleerungsauftrag **48** wird generiert. Der Entleerungsauftrag **48** wird in das Betriebsführungssystem **8,** das Portal **44** oder die App **46** übertragen und einer Entleerungskolonne zugewiesen. Dies kann vom System automatisiert oder manuell erfolgen. Der Auftrag wird ausgeführt. Die Ausführung **50** wird in der zentralen Stelle **18** dokumentiert.

### Bezeichnungsliste

**2** Geografisches Informationssystem GIS/Kanalinformationssystem KIS
**4** Hydrauliksoftware
**6** Kanalzustandskataster
**8** Lokale Experten Betriebsführungssystem '
**10** Geodaten
**12** Wandschubspannung
**14** Schadstellen im Kanal
**16** historische Kenntnisse zum Ablagerungsverhalten
**18** Zentrale Stelle als IoT-Plattform
**20** Algorithmus
**22** Wahrscheinlichkeit für Ablagerungen
**24** Priorisierung
**26** Vorschlag für Einbauorte der Messanlagen/Schachtnummern
**28** Granulatstreupläne aus Winterdienstplänen
**30** Baumkataster
**32** Lagedaten von Straßeneinläufen/Sinkkästen
**34** Granulatabschwemmungen
**36** Baumstandorte
**38** Ablagerungsbildung
**40** Sinkkastennummern
**44** Portal
**46** App
**48** Arbeitsaufträge
**50** Rückmeldung
**52** aufbereitete Daten
**54** reale Ablagerungsbildung
**56** Einbau und Vernetzung der Messanlagen nach Vorschlag des Algorithmus
**58** Datenübertragung
**60** Router/Gateway oder anderer Empfänger
**62** Messanlage
**64** Straßeneinlauf- oder Sinkkastenrost
**66** Schlammeimeroberkante
**68** Datenübertragung
**70** Schlammeimer
**72** Messanlagensensorunterkante
**74** nasser Straßeneinlauf
**76** Ablagerungen im Schlammtopf
**78** Kanalhaltung
**80** Gerinnesohle
**82** Messanlagensensorunterkante
**84** Revisionsschacht
**86** Datenübertragung
**88** Ablagerungen in Kanalhaltung oder Schacht
**90** Fließrichtung
**92** Schlammsammeltopf
**94** Wasseroberfläche

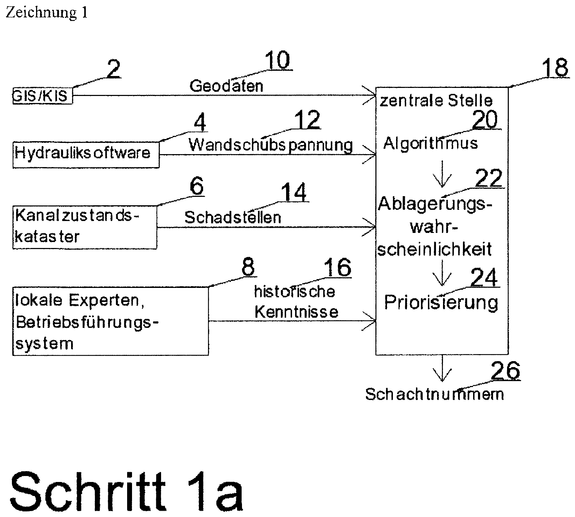

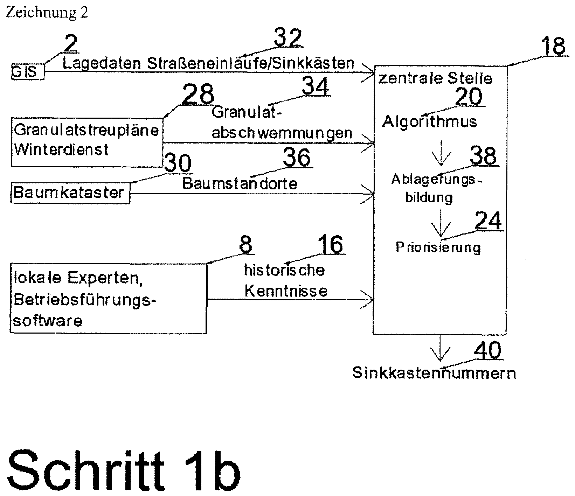

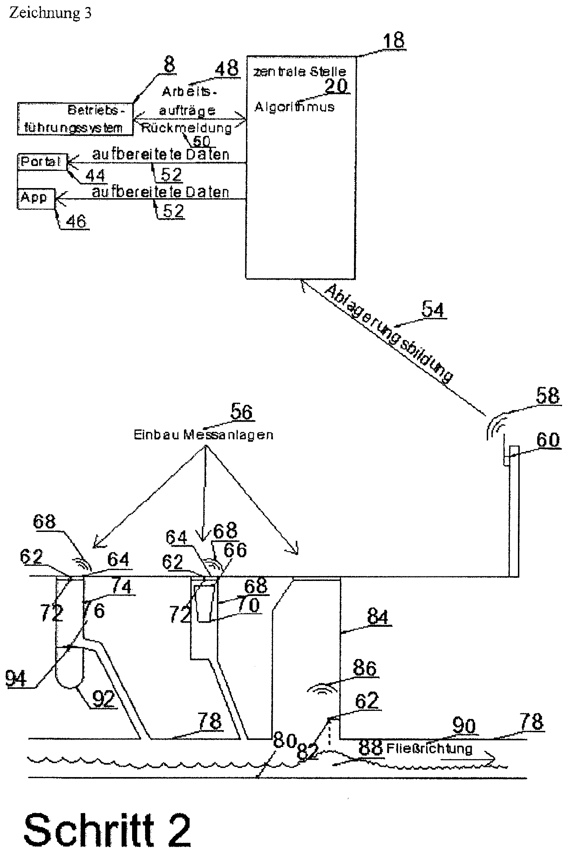

## Patentansprüche

1. Verfahren zur vereinfachten Bestimmung, Planung, Verbesserung und Dokumentation von bedarfsorientierten Reinigungsvorgängen und Reinigungsprogrammen für Abwasserkanäle **78,** Sinkkästen oder Straßeneinläufe **68 bzw 74** durch Vorauswahl der mit Messanlagen **62** auszustattenden Revisionsschächte **84,** Straßeneinläufe oder Sinkkästen **68 bzw 74** mit verstärktem Ablagerungsverhalten in einer zentralen Stelle **18** über einen Algorithmus **20,** Ausstattung der so ermittelten Revisionsschächte **26,** Sinkkästen oder Straßeneinläufe **68 bzw 74** mit Messanlagen **62** und durch Aufnahme von Messwerten, deren Weiterleitung **68 bzw. 86** an die zentrale Stelle **18** mit stetiger Verbesserung der Reinigungsprogramme und Generierung von Reinigungsaufträgen **48.**

2. Verfahren nach **Anspruch 1, gekennzeichnet dadurch, dass** es eine zentrale Stelle **18** enthält, die mit maschinellen und manuellen Schnittstellen ausgestattet ist. Bei der zentralen Stelle **18** handelt es sich um eine zentrale Datenbank oder sogenannte IoT-Plattform, die Daten aus weiteren Quellen erhält. Diese Plattform kann in der Cloud als Software as a Service zur Verfügung gestellt, beim Entwässerungsbetrieb vor Ort installiert oder in einem beliebigen Rechenzentrum betrieben werden. Auf der zentralen Stelle **18** läuft ein Algorithmus **20.** Sämtliche geografischen Daten **10** der Revisionsschächte **84** und Haltungen **78** eines kommunalen Kanalnetzes fließen aus einem Kanalinformationssystem oder geografischen Informationssystem **2** in einen Algorithmus **20.** Als weitere Daten fließen für alle Regen-, Schmutz-, Mischwasser- und Straßenentwässerungskanäle einer Kommune mit einer Hydrauliksoftware **4** ermittelten Wandschubspannungen **12** in den Algorithmus **20** ein. Weiterhin fließen alle ablagerungsbildenden Schäden wie Unterbögen, Verwurzelungen, Scherbenbildungen, klaffende Muffen und einragende Stutzen **14** aus einem Kanalzustandskataster **6** in den Algorithmus **20** ein. Danach fließen historische Kenntnisse **16** zu vorhandenen bekannten Ablagerungsschwerpunkten des Kanalnetzes aus dem Wissen lokaler Experten **8** und einem ggf. vorhandenen Betriebsführungssystem **8** in den Algorithmus **20** ein. Der Algorithmus **20** liefert aus diesen Eingangsdaten Wahrscheinlichkeiten von Ablagerungen **22** in den eingeflossenen Kanalhaltungen **78,** die zu betrachtenden Kanalhaltungen **78** werden priorisiert **24,** und ausgegeben werden die Schachtnummern **26** der jeweils obenliegenden Schächte von Kanalhaltungen mit hoher Wahrscheinlichkeit der Ablagerungsbildung **22.**

3. Verfahren nach **Anspruch 2, gekennzeichnet dadurch, dass** ein Netzwerk mit entsprechenden Routern **60** oder Gateways **60** aufgebaut wird oder bereits vorhanden ist, das der Übertragung **68 bzw. 86** der von Messanlagen **62** aufgenommenen und den Datenübertragungsmodulen weitergeleiteten Daten dient. Bei dem Datenübertragungsnetz kann es sich um eines der folgenden Netze handeln: LoRaWAN, Symphony, NB-loT, 2G, 3G, 4G, 5G, LTE-M oder sonstige Mobilfunknetze, Sigfox, Lemonbeat, Mioty, WavIoT Weightless-N, Weightless-P oder Weightless-W, RPMA, WiFi HaLow, BTLE, NFC oder RFID Link.

4. Verfahren nach **Anspruch 2 und 3, dadurch gekennzeichnet, dass** Messanlagen **62** in die nach Verfahren 2 ermittelten Einbauorte **56** bzw. Schächte **84,** inklusive der entsprechenden Datenübertragungsmodule und Energieversorgung durch Batterien, installiert werden. Die Messanlagen **62** sind explosionsgeschützt und in der Ex-Zone 1 einsetzbar. Die Energieversorgung erfolgt über entsprechende für den Explosionsschutz zugelassene Batterien. Die Installation erfolgt über dem Gerinne **80** im Schacht **84** auf der Ablaufseite. Die Messanlagen **62 sind dadurch gekennzeichnet, dass** es sich bei den Messanlagen **62** um Abstandsmesssensoren wie Ultraschall, Radar oder Lidar handeln kann. Bei dem verwendeten Datenübertragungsmodul kann es sich um LoRaWAN, Symphony, NB-IoT, 2G, 3G, 4G, 5G, LTE-M oder sonstige Mobilfunknetze, Sigfox, Lemonbeat, Mioty, WavIoT Weightless-N, Weightless-P oder Weightless-W, RPMA, WiFi HaLow, BTLE, NFC oder RFID Link Module handeln. Die Messanlagen **62** in den Schächten **84** übermitteln über das verbaute Datenübertragungsmodul und das aufgebaute, oder bereits vorhandene, Datennetz täglich den Abstand zwischen Messanlagenunterkante **82** und Wasseroberfläche des im Gerinne fließenden Abwassers an die zentrale Stelle **18**. Bei einem Kanal ohne Ablagerungen ist dieser Abstand höchstens so groß wie der Abstand zwischen der Unterkante der Messanlage **82** und der Gerinnesohle **80.** Bei Trockenwetter werden nun über eine Woche Tagesganglinien aufgezeichnet. Der hier aufgezeichnete niedrigste Wert stellt dann die Nulllinie für die Ereigniserfassung dar. Bilden sich nun Ablagerungen im Kanal **88,** reduziert sich Abstand von der Nulllinie und der Messanlagenunterkante **82.** Über die so in der zentralen Stelle **18** erfassten Messdaten **54** kann der Algorithmus **20** Vorhersagen zum Ablagerungsverhalten **54** berechnen und Reinigungsaufträge **48** generieren. Die Reinigungsaufträge **48** werden in das Betriebsführungssystem **8,** das Portal **44** oder die App **46** übertragen und einer Spülkolonne zugewiesen vom System automatisiert oder manuell und ausgeführt. Die Ausführung wird im System dokumentiert **50.**

5. Verfahren nach **Anspruch 4,** bei welchem die Messanlagen **62** in den obenliegenden Schächten **84** niedriger priorisierter Kanalhaltungen **26** umgesetzt werden, um so über die Zeit eine flächendeckende Spülplanverfeinerung zu erlangen und komplett auf bedarfsorientierte Reinigung umzustellen.

6. Verfahren nach **Anspruch 1 und 2, gekennzeichnet dadurch, dass** in den Algorithmus **20** geografische Lagedaten **32** der öffentlichen Sträßeneinläufe oder Sinkkästen **68 bzw. 74** aus einem geografischen Informationssystem **2** oder Kahalinfonnationssystem **2** einfließen. Als weitere Daten fließen aus den Winterdienstplänen **28** Granulatstreupläne 28 einer Kommune in den Algorithmus **20** ein. Aus einem Baumkataster **30** fließen Standortdaten von Bäumen **36** in den Algorithmus **20** ein. Weiterhin fließen historische Kenntnisse **16** lokaler Experten **8** und historische Daten aus einem Betriebsführungssystem **8** zu verstärktem Ablagerungsverhalten in den Algorithmus **20** ein. Der Algorithmus **20** liefert aus diesen Eingangsdaten Wahrscheinlichkeiten von verstärkten Ablagerungen **38** in den Straßeneinläufen oder Sinkkästen **68 bzw. 74,** die zu betrachtenden Straßeneinläufe oder Sinkkästen **68 bzw. 74** werden priorisiert **24** und ausgegeben werden die Straßeneinlauf- oder Sinkkastennummern **40** der Straßeneinläufe oder Sinkkästen **68 bzw. 74** mit hoher Wahrscheinlichkeit der Ablagerungsbildung **38.**

7. Verfahren nach **Anspruch 4, dadurch gekennzeichnet, dass** Messanlagen **62** nach Anspruch 3 in die nach Verfahren 6 ermittelten Einbauorte **56** oder Straßeneinläufe und Sinkkästen **68 bzw. 74,** inklusive der entsprechenden Datenübertragungsmodule und Energieversorgung durch Batterien, installiert werden. Die Messanlagen **62** für nasse Straßeneinläufe oder Sinkkästen **74** werden über dem Schlammsammeltopf **92** angebracht. Der Abstand zwischen Messanlagenunterkante **72** und Wasseroberfläche **94** des Schlammsammeltopfes **92** ist der Normalzustand. Wenn der Schlammsammeltopf **92** voll ist, bildet sich ein kleiner Hügel **76** über der Wasseroberfläche **94,** so, dass sich der Abstand zur Messanlagenunterkante **72** reduziert. Die Messanlagen **62** für trockene Straßeneinläufe oder Sinkkästen **68** werden über dem Eimer **70** angebracht und der Abstand zwischen Messanlagenunterkante **72** und Eimerfülloberkante **66** wird gemessen und übermittelt. Füllt sich der Eimer **70** bis über die Eimerfülloberkante **66,** reduziert sich der Abstand zwischen Messanlagenunterkante **72** und Eimerfülloberkante **66.** Die in den Straßeneinläufen oder Sinkkästen **68 bzw. 74** gemessenen Daten werden über das Datenübertragungsnetz aus Anspruch 3 über Router **60** oder Gateways **60** an die zentrale Stelle **18** gesendet. Über die so in der zentralen Stelle **18** erfassten Messdaten **54** kann der Algorithmus **20** Vorhersagen zum Ablagerungsverhalten **38** berechnen und Reinigungsaufträge **48** generieren. Die Reinigungsaufträge **48** werden in das Betriebsführungssystem **8,** das Portal **44** oder die App **46** übertragen und einer Entleerungskolonne zugewiesen, vom System automatisiert oder manuell, und ausgeführt. Die Ausführung wird im System dokumentiert **50.**

8. Verfahren nach **Anspruch 4,** bei welchem die Messsonden **62** in den Einlaufrosten **62** der Straßeneinläufen oder Sinkkästen **68 bzw. 74** niedriger priorisierter **24** Straßeneinläufe oder Sinkkästen **68 bzw. 74** umgesetzt werden, um so über die Zeit eine flächendeckende Entleerungsplanverfeinerung zu erlangen und komplett auf bedarfsorientierte Reinigung umzustellen.
Es folgen 3 Zeichnungen und die Zusammenfassung.
